# EUROPEAN PATENT APPLICATION

(11) **EP 4 760 203 A1**
(43) Date of publication of application: **17.06.2026**
(21) Application number: 25758716.2
(22) Date of filing: 20.02.2025
(51) Int. Cl.: G01B 21/06, G01B 21/30, H01M 50/40

(54) **SYSTEM FOR DETERMINING WAVINESS OF THIN FILM BEING CONVEYED**

(30) Priority: 20.02.2024 KR 20240024376
(71) Applicant: LG Chem, Ltd., Seoul 07336 (KR)
(72) Inventor: LYU, Byung Gook, Daejeon 34122 (KR); KIM, Byung Mook, Daejeon 34122 (KR); BAE, Sung Hak, Daejeon 34122 (KR)
(74) Representative: Hoffmann Eitle
(86) International application number: PCT/KR2025/099472
(87) International publication number: WO 2025/178467

(57) **Abstract**

The present disclosure relates to a system for determining waviness of a thin film, which has a predetermined size in a width direction and extends in the longitudinal direction, caused by tension acting on the thin film and non-uniformity of a thin film material in a roll-to-roll inline apparatus that transports the thin film in the longitudinal direction. The system includes: a lateral displacement sensor installed at one or more of both sides of the thin film in the width direction to be spaced apart from the surface of the thin film and configured to measure a displacement of the thin film surface; and a waviness determination unit for converting the lateral displacement value of the thin film surface according to time measured by the lateral displacement sensor into a magnitude value according to a frequency signal and comparing the converted magnitude value with a preset magnitude value according to the frequency signal to determine the presence or absence of waviness in the thin film.

## Description

### [Technical Field]

The present disclosure claims the benefit of the filing date of Korean Patent Application No. 10-2024-0024376, filed with the Korean Intellectual Property Office on February 20, 2024, the entire contents of which are incorporated herein by reference.

The present disclosure relates to a system for determining waviness of a thin film, and more specifically, to a system for converting data measured by a displacement sensor in real time to determine waviness of a separator generated in a roll-to-roll apparatus and the resulting good/defective quality of the separator.

### [Background Art]

The separator is a conductive membrane that isolates two electrode parts of a secondary battery to prevent the electrode parts from being in physical contact with each other and provides a passage for ions to move through micropores, and may be subjected to each process through a roll-to-roll apparatus using a plurality of rolls in order to improve process speed.

In the roll-to-roll process, in order to rotate a separator wound on one roll and wind it onto the other roll, tension is applied to the separator through the rotation of the rolls on both sides. However, in the drying process during the safety reinforced separator (SRS) coating process, the coating should be formed not to contact the rolls before drying, and thus, a distance between the rolls is formed to be very wide. Due to the distance between the rolls and the weak tension applied to the separator, waviness is generated in the separator, and when a width of the waviness formed in the separator is large, the separator may be damaged by contacting the upper and lower portions of the drying apparatus.

Therefore, in order to predict whether the separator is damaged due to the waviness, an incoming quality control (IQC) is conducted to check for any abnormalities in the film.

However, in the existing IQC, some samples are collected and inspected before the process proceeds. Therefore, the representativeness of the samples may be in question, and since the samples are inspected individually, it is costly and time-consuming, and there is a problem of damaging the object to extract the samples. In particular, since sample extraction and measurement are performed separately from the process and manually, the accuracy of the data obtained as a result of the inspection may also be questionable.

In conclusion, the existing inspection method, IQC, not only cannot identify defective products in real time, but also has many disadvantages in terms of cost, time, and accuracy.

The background technology described above is technical information possessed by the inventors for the purpose of deriving embodiments of the present disclosure or acquired during the derivation process, but cannot necessarily be said to be publicly known technology disclosed to the general public prior to the filing of the embodiments of the present disclosure.

### [Disclosure]

### [Technical Problem]

In order to solve the above problem, the present disclosure provides a thin film waviness determination system for determining the waviness generation and good/defective quality of a thin film by installing a displacement sensor to be spaced apart from the surface of a separator in a roll-to-roll apparatus, converting the measured displacement value of the separator into a magnitude value according to a frequency signal, and comparing it with a preset magnitude value.

### [Technical Solution]

A thin film waviness determination system according to an embodiment of the present disclosure is a system for determining waviness of a thin film, which is formed to have a predetermined size in a width direction and extend in a longitudinal direction, caused by tension acting on the thin film and non-uniformity of a thin film material in a roll-to-roll inline apparatus that transports the thin film in the longitudinal direction, the system including: a lateral displacement sensor installed at one or more of both sides of the thin film in the width direction to be spaced apart from the surface of the thin film and configured to measure a displacement of the thin film surface; and a waviness determination unit for converting the lateral displacement value of the thin film surface according to time measured by the lateral displacement sensor into a magnitude value according to a frequency signal and comparing the converted magnitude value with a preset magnitude value according to the frequency signal to determine the presence or absence of waviness in the thin film.

According to an embodiment of the present disclosure, the lateral displacement sensor may measure the displacement of the thin film surface by irradiating light perpendicularly toward the surface of the thin film.

According to an embodiment of the present disclosure, the displacement of the thin film surface may be measured by an angle and wavelength of light irradiated from the lateral displacement sensor and reflected from the thin film surface.

According to an embodiment of the present disclosure, the lateral displacement sensor may be a laser sensor.

According to an embodiment of the present disclosure, the waviness determination unit may determine that the thin film is defective when the converted magnitude value falls outside a predetermined range based on the preset magnitude value.

According to an embodiment of the present disclosure, the system may further include a central displacement sensor installed at a center of the width direction of the thin film to be spaced apart from the thin film surface and configured to measure a displacement of the thin film surface.

According to an embodiment of the present disclosure, the system may further include a calibration unit for correcting the lateral displacement value of the thin film measured by the lateral displacement sensor based on the central displacement value of the thin film measured by the central displacement sensor.

According to an embodiment of the present disclosure, the calibration unit may correct the lateral displacement value of the thin film measured by the lateral displacement sensor by subtracting the central displacement value of the thin film measured by the central displacement sensor from the lateral displacement value.

According to an embodiment of the present disclosure, the calibration unit may correct the lateral displacement value of the thin film measured by the lateral displacement sensor by dividing the lateral displacement value by the central displacement value of the thin film measured by the central displacement sensor.

According to an embodiment of the present disclosure, the waviness determination unit may determine the lateral displacement value of the thin film based on a value measured at a predetermined time interval.

According to an embodiment of the present disclosure, the waviness determination unit may specify a portion of the thin film that has been determined to be defective through the lateral displacement value of the thin film measured at the predetermined time interval.

According to an embodiment of the present disclosure, the waviness determination unit may determine whether the thin film is defective within a frequency range of 15 Hz or more and 30 Hz or less.

According to an embodiment of the present disclosure, the waviness determination unit may determine whether the thin film is defective within a frequency range of more than 0 Hz and 2 Hz or less.

According to an embodiment of the present disclosure, the waviness determination unit may calculate the preset magnitude value based on at least one parameter of a distance between the rolls of the roll-to-roll inline apparatus, a position of the lateral displacement sensor, a thickness, weight, and distance in the width direction of the thin film, tension acting on the thin film, and a transport speed of the thin film.

According to an embodiment of the present disclosure, the waviness determination unit may use a fast Fourier transform when converting the measured lateral displacement value of the thin film according to time into the converted magnitude value according to a frequency signal.

According to an embodiment of the present disclosure, the lateral displacement sensor may be formed to be spaced apart from an end of the thin film by more than 0 cm and 5 cm or less in the width direction of the thin film.

According to an embodiment of the present disclosure, the system may further include a display unit for outputting the converted magnitude value in real time.

### [Advantageous Effects]

The present disclosure automatically inspects waviness generated in a separator, thereby reducing costs and time.

Furthermore, unlike existing methods that extract samples, potentially damage the object, and inspect only a portion of the object, the present disclosure performs a complete inspection of the separator, thereby improving yield.

In addition, the present disclosure can more easily specify a defective part of the separator through data measured in real time.

In addition, since the set values are calculated based on various variables generated during the process, the cause of the waviness can be more easily found.

In addition, since it is easy to grasp the tendency of the waviness according to the process method or lot (bundle unit) by quantifying the waviness of the separator, there is an effect of removing defects in advance in the process step.

The effects obtainable in the disclosure are not limited to the effects mentioned above, and other effects not mentioned will be clearly understood by those skilled in the art to which the present disclosure belongs from the following description.

### [Description of Drawings]

FIG. 1a illustrates photographs of a thin film waviness determination system 1 according to an embodiment of the present disclosure, and FIG 1b illustrates a schematic drawing of the thin film waviness determination system 1 according to an embodiment of the present disclosure.
FIG. 2 illustrates a block diagram of a thin film waviness determination system 1 according to an embodiment of the present disclosure.
FIG. 3 illustrates a graph of displacement values measured by a displacement sensor in a thin film waviness determination system according to an embodiment of the present disclosure.
FIG. 4 illustrates a graph of magnitude values according to frequency signals through a fast Fourier transform in a thin film waviness determination system according to an embodiment of the present disclosure.
FIG. 5 illustrates a graph of magnitude values according to frequency signals for each predetermined section in a thin film waviness determination system according to an embodiment of the present disclosure.
FIG. 6 illustrates graphs of frequency ranges for determining good/defective quality of a thin film in a thin film waviness determination system according to an embodiment of the present disclosure.
FIG. 7 illustrates a graph of a relationship between waviness size and signal processing for determining good/defective quality of a thin film in a thin film waviness determination system according to an embodiment of the present disclosure.

### [Description of Reference Numerals and Symbols]

- 1:: Thin film waviness determination system
- 10:: Lateral displacement sensor
- 20:: Central displacement sensor
- 30:: Calibration unit
- 40:: Waviness determination unit
- 50:: Roll
- 60:: Display unit
- TF:: Thin film

### [Best Mode]

The present disclosure will become clear with reference to embodiments described in detail below together with the accompanying drawings. However, the present disclosure is not limited to the embodiments described below and may be implemented in various different forms. These embodiments are provided only to make the disclosure of the present disclosure complete and to fully inform those skilled in the art of the scope of the disclosure. The present disclosure is defined only by the scope of the claims. Meanwhile, the terms used in the specification are for describing embodiments and are not intended to limit the present disclosure.

Throughout the specification, singular forms also include plural forms, unless specifically stated otherwise in the context.

As used throughout the specification, the terms "comprises" and/or "comprising" means that the presence or addition of one or more other components, steps, operations and/or devices in addition to the mentioned components, steps, operations and/or devices is not excluded, and other components may be further included, rather than excluding other components, unless specifically stated to the contrary.

In addition, the term "...part/unit" described throughout the specification refers to a unit that processes at least one function or operation, which may be implemented as hardware, software, or a combination of hardware and software.

In addition, throughout the specification, when it is said that a part is "connected" to another part, this includes not only cases where they are "directly connected," but also cases where they are "indirectly connected" with another component interposed therebetween.

Hereinafter, the present disclosure will be described in more detail.

The present disclosure relates to a system for determining waviness of a thin film, which is for automatically determining whether the thin film is damaged due to the waviness generated in a roll-to-roll apparatus that operates to rotate a thin film wound on one roll and wind it on another roll. The thin film is a film having a predetermined width and length, and may be extended in the longitudinal direction and be wound on a plurality of rolls. The plurality of rolls may rotate in the same direction to transport the thin film from one roll to another roll.

Since the thin film transported by the roll-to-roll apparatus is rotated and transported while being wound around both ends, a certain amount of waviness may occur due to the tension acting on the thin film and the characteristics of the thin film material. When the waviness generated in the thin film is less than or equal to a predetermined level, there is no problem, but when it exceeds a predetermined range, the thin film may be damaged.

Here, the "thin film" is a thin film transported by the roll-to-roll apparatus and is not particularly limited, but in an embodiment, it may be a 'separator'. The separator is a conductive membrane that isolates two electrode parts of a secondary battery to prevent the electrode parts from being in physical contact with each other and provides a passage for ions to move through micropores.

Hereinafter, the present disclosure will be described in more detail with respect to a system 1 for determining whether waviness is generated in a roll-to-roll inline apparatus transporting a separator.

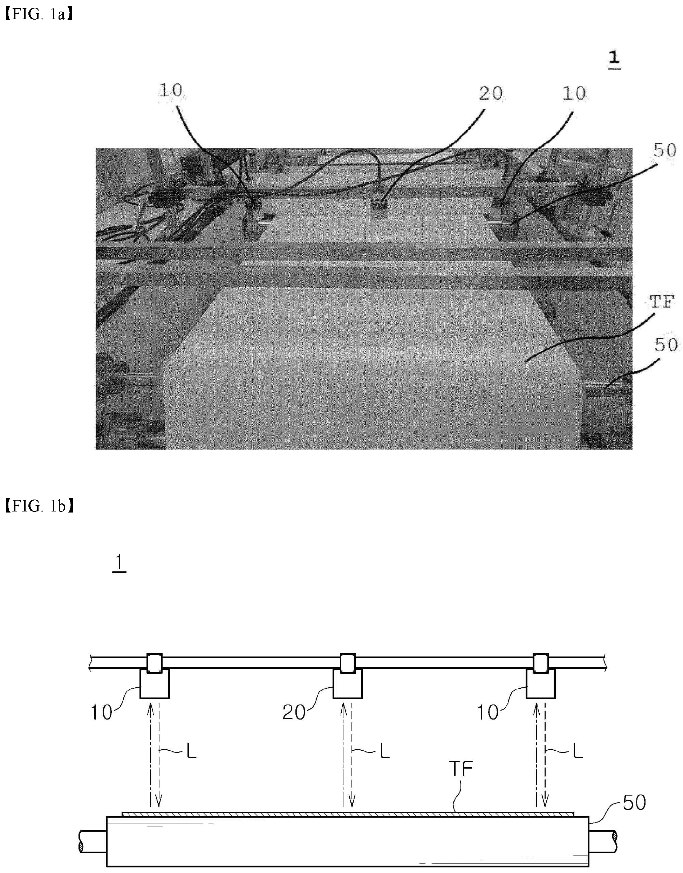

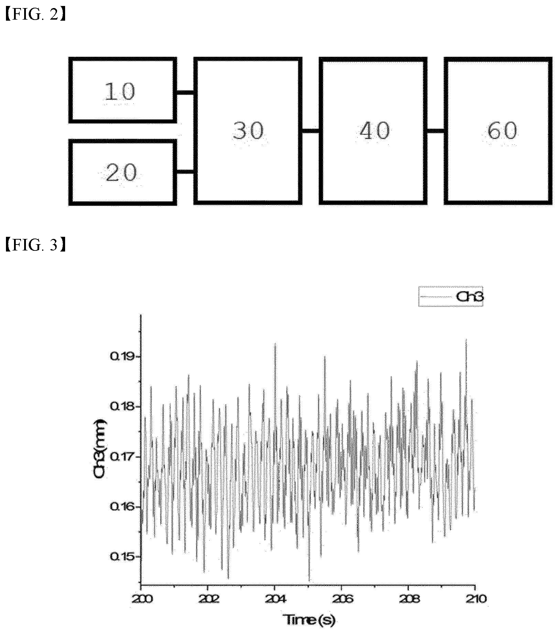

FIGS. 1a and 1b illustrate photographs of a thin film waviness determination system 1 according to an embodiment of the present disclosure, and FIG. 2 illustrates a block diagram of a thin film waviness determination system 1 according to an embodiment of the present disclosure.

Referring to FIGS. 1a, 1b, and 2, a thin film waviness determination system 1 according to an embodiment of the present disclosure may include a lateral displacement sensor 10 and a waviness determination unit 40.

The lateral displacement sensor 10 is a sensor that measures a displacement of a thin film (TF), and may be installed in parallel to the width direction of the thin film (TF). In particular, referring to FIGS. 1a and 1b, the lateral displacement sensor 10 is formed above a lateral surface of the thin film (TF), in the width direction and may determine whether waviness formed at the lateral end of the thin film (TF) is generated.

The lateral displacement sensor 10 may be installed at one or more of both sides of the thin film (TF) in the width direction. That is, referring to FIG. 1b, it may be installed above the right surface or the left surface of the thin film (TF) based on the transport direction of the thin film (TF), or may be installed above both the right and left surfaces. Since the waviness generated in the thin film (TF) may occur independently regardless of whether they are on the right or left, the location of waviness in the thin film (TF) transported through a roll-to-roll inline apparatus can be more accurately determined according to the number of the installed lateral displacement sensors 10.

In addition, the lateral displacement sensor 10 may be disposed between rolls 50 in the roll-to-roll inline apparatus to measure the waviness of the thin film (TF). That is, FIG. 1b illustrates a front view of the lateral displacement sensors 10 disposed between the rolls 50 as in FIG. la, rather than the lateral displacement sensors 10 formed above the thin film (TF) formed on the upper side of the roll 50.

The lateral displacement sensors 10 may be formed to be spaced apart from the surface of the thin film (TF) by a predetermined distance, which may be differently adjusted depending on the degree of waviness generation and the type of sensor.

Referring to FIG. 1b, the lateral displacement sensor 10 is provided above the surface of the thin film (TF) and can measure a distance from the surface of the thin film (TF). Unlike rigid bodies such as metal, the presence or absence and degree of waviness in the thin film (TF) vary depending not only on the characteristics of the thin film (TF) itself, but also on the tension of both rolls 50 that transport the thin film. Therefore, in the case of the thin film (TF), the presence or absence of waviness in the thin film (TF) may be determined by measuring the degree of waviness occurring on both sides (right and/or left) of the thin film.

In particular, the lateral displacement sensor 10 may irradiate light (L) perpendicularly toward the surface of the thin film (TF). The irradiated light (L) may be reflected from the surface of the thin film (TF) and then received by the lateral displacement sensor 10. Therefore, a displacement of the surface of the thin film (TF) may be measured based on the angle and wavelength of the irradiated and reflected light (L).

In an embodiment, the lateral displacement sensor 10 may be a laser sensor to measure the distance to the surface of the thin film (TF). The laser sensor is a sensor that measures a distance to a target object using laser light (L), and may measure the displacement of the thin film (TF) surface based on a change in time according to the travel distance of the laser light (L) by receiving the laser light (L) irradiated from the lateral displacement sensor 10 and reflected from the surface of the thin film (TF).

In addition, the lateral displacement sensor 10 may be formed to be spaced apart from the end of the thin film (TF) by a predetermined distance in the width direction of the thin film (TF). In particular, when the thin film (TF) is a separator in the present disclosure, it may be formed within a range of more than 0 cm and 5 cm or less from the end of the thin film (TF). Within this range, the extent of damage caused by the waviness formed in the separator can be more easily determined.

Meanwhile, the thin film waviness determination system 1 according to an embodiment of the present disclosure may further include, in addition to the lateral displacement sensor 10, a central displacement sensor 20 for measuring a displacement formed at the center of the thin film (TF) surface.

The central displacement sensor 20 may be installed to be located at the center of the thin film (TF) in the width direction and spaced apart from the surface of the thin film (TF) by a predetermined distance. The displacement value at the center of the thin film (TF) in the width direction, measured by the central displacement sensor 20, may itself determine the presence or absence of waviness in the thin film (TF), but may also be used as a value for correcting the displacement value of the thin film (TF) measured by the lateral displacement sensor 10. More specifically, the displacement value of the thin film (TF) measured by the lateral displacement sensor 10 may be calibrated with the displacement value of the thin film (TF) measured by the central displacement sensor 20 to more accurately determine the presence or absence of the waviness in the thin film (TF).

Accordingly, the present disclosure may further include a calibration unit 30 for performing this correction process. The calibration unit 30 may correct the displacement value of the thin film (TF) in various ways. In an embodiment, the calibration unit 30 may perform the correction by subtracting the central displacement value of the thin film (TF) measured by the central displacement sensor from the lateral displacement value of the thin film (TF) measured by the lateral displacement sensor 10, or by dividing the lateral displacement value of the thin film (TF) measured by the lateral displacement sensor 10 by the central displacement value of the thin film (TF) measured by the central displacement sensor.

In this case, the presence or absence of the waviness formed in the thin film (TF) can be more easily determined through the difference in size or ratio between the displacement of the central portion and the displacement of the lateral portion of the thin film (TF). In other words, since the roll 50 that transports the thin film (TF) is a rigid body, it is generally difficult to distinguish whether the waviness generated in the thin film (TF) transported between the rolls 50 is a mechanical vibration generated in the rolls 50 or waviness generated in the thin film (TF) itself. Therefore, by separately measuring the displacement of the central portion, the mechanical vibration generated in the rolls 50 can be detected and the displacement of the lateral portion can be calibrated to more clearly determine the presence or absence of the waviness formed in the thin film (TF).

The thin film waviness determination system 1 according to an embodiment of the present disclosure may further include a waviness determination unit 40 capable of determining the waviness generated in a thin film (TF) using data measured from the lateral displacement sensor 10.

The waviness determination unit 40 may determine the presence or absence of the waviness by converting the displacement value of the thin film (TF) surface measured by the lateral displacement sensor 10 into a magnitude value. That is, the lateral displacement sensor 10 may measure the lateral displacement value of the thin film (TF) surface when the thin film (TF) is transported, and may derive the lateral displacement value of the thin film (TF) surface according to the measured time. This displacement value of the thin film (TF) surface according to time may be converted into a magnitude value according to a frequency signal, and this value may be compared with a preset magnitude value to determine the presence or absence of the waviness in the thin film (TF). In conclusion, when the converted magnitude value does not fall outside a predetermined range based on the preset magnitude value within a specific frequency signal range, the thin film may be determined as good product, and when it falls outside the predetermined range, the thin film may be determined as defective product.

In addition, the converted magnitude value converted through the waviness determination unit 40 may be directly output. More specifically, a display unit 60 for outputting the converted magnitude value so that the operator can check the degree of the waviness in real time may be further included. The display unit 60 is a visual device that outputs the waviness magnitude value in the form of a number, etc. and in an embodiment, may be an LCD, but is not limited to the specific embodiment.

Ultimately, since the converted magnitude value of the waviness formed in the thin film (TF) may be separately calculated through the display unit 60, the degree of the waviness formed in the thin film (TF) may be provided to the operator in real time.

The calibration unit 30 and the waviness determination unit 40 are a type of microprocessor, and may be comprised of a calculation unit, a control unit, etc. They are configured to calculate desired data through a set calculation process based on input data, and may use a general chip-shaped processing device used in a device such as a computer, etc.

Hereinafter, the determination of the presence or absence of waviness in the thin film (TF) by the waviness determination unit 40 will be described in more detail.

When converting the measured lateral displacement value of the thin film (TF) according to time into a converted magnitude value according a frequency signal, a fast Fourier transform (FFT) may be used. The fast Fourier transform is a method of providing frequency information on a signal by converting a measured signal into individual spectral components. In the present disclosure, the lateral displacement values of the thin film (TF) are sampled for a predetermined period of time when the thin film (TF) is transported along a roll-to-roll apparatus, divided into frequency components, and then expressed as separate frequencies, each having its own amplitude and phase.

Ultimately, wave information can be more easily analyzed through the magnitude values displayed according to frequency. More specifically, in a roll-to-roll apparatus, there is a problem in that mechanical vibrations generated from the roll 50 may be transmitted to the thin film (TF), which may cause large waviness. Therefore, the use of the fast Fourier transform has the advantage of being able to measure the intensity of the unique frequency of the thin film (TF) itself from which the mechanical vibrations generated from the roll 50, i.e., noise have been removed.

In addition, the converted magnitude value according to the frequency signal may be determined through a value measured at a predetermined interval. More specifically, the lateral displacement value of the thin film (TF) measured by the lateral displacement sensor 10 at a predetermined time interval may be converted into the converted magnitude value according to the frequency signal. When measuring the lateral displacement values of the thin film (TF) for a predetermined period of time, a predetermined portion of the thin film (TF) can be specified, and the defective portion of the thin film (TF) can also be easily specified when determining the presence or absence of waviness and defects in the thin film (TF) by the waviness determination unit 40. In conclusion, in order to clearly specify the portion of the thin film (TF) where waviness and defect occur, the lateral displacement value of the thin film (TF) may be determined by dividing it at a predetermined time interval.

After deriving the converted magnitude value according to the frequency signal, the presence or absence of the waviness in the thin film (TF) may be determined by comparing it with a preset magnitude value according to the frequency signal. That is, by comparing the converted magnitude value calculated through actual measurement with the preset magnitude value, which serves as a reference for determining the presence or absence of waviness and good/defective quality of the thin film (TF), the thin film (TF) may be determined as defective if it falls outside a predetermined range in a specific frequency range.

Here, the "preset magnitude value" may be determined using data obtained under conditions identical to, or most similar to, those in the object to be measured and the measuring device before measuring the waviness of the thin film. More specifically, in the thin film (TF) transported by a roll-to-roll inline apparatus, the degree and location of waviness and the degree of defects caused by the waviness vary depending on the thickness of the thin film (TF), unit weight, length in the width direction, tension applied to the thin film (TF), transport speed of the thin film, separation distance between the rolls 50, location of the lateral displacement sensor 10, quality of the thin film (TF) itself, etc. Therefore, when the roll-to-roll inline apparatus for transporting the thin film (TF) and the thin film (TF) to be transported are selected, data capable of determining the degree of defects in advance can be obtained by reflecting the various conditions mentioned above.

These parameter values may also be applied when transporting a separator in the thin film (TF) waviness determination system 1 according to an embodiment of the present disclosure. That is, the preset displacement value may be calculated based on at least one parameter among a distance between the rolls 50 of the roll-to-roll inline apparatus, a position of the lateral displacement sensor 10, a thickness, weight, and distance in a width direction of the thin film. The calculated value may be divided at predetermined time intervals and stored as a preset displacement value according to a frequency signal through the fast Fourier transform mentioned above.

Thereafter, when the magnitude value according to the frequency signal falls outside a predetermined range based on the preset magnitude value according to the frequency range, the thin film (TF) may be determined as defective. As described in more detail in the following embodiments, the frequency range for determining good/defective quality may vary somewhat depending on the width of the thin film.

For example, the waviness determination unit 40 may determine whether the thin film (TF) is defective within a frequency range of 15 Hz or more and 30 Hz or less. Alternatively, the waviness determination unit 40 may determine whether the thin film (TF) is defective within a frequency range of more than 0 Hz and 2 Hz or less.

In conclusion, in the case of a thin film with a very narrow width, it is treated as a one-dimensional sample like a thread, and the natural frequency of the entire one-dimensional sample is measured using only one displacement sensor and then the tension is calculated using a wave equation, whereas the present disclosure targets a thin film with a very wide width, so the one-dimensional analysis as described above is impossible. Therefore, the present disclosure utilizes two-dimensional data measured by two or more displacement sensors to generate unstructured signals, thereby enabling faster and more accurate determination of the good/defective quality of the thin film (TF).

### [Modes for Carrying Out the Invention]

Hereinafter, embodiments of the system 1 for determining waviness of a thin film according to the present disclosure are further described.

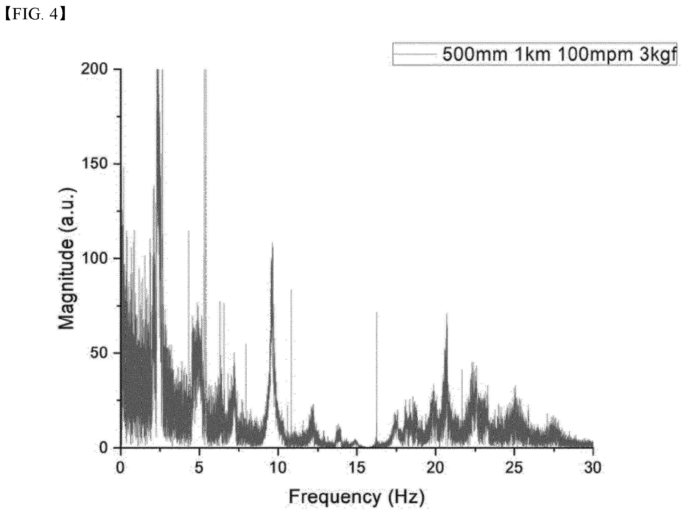

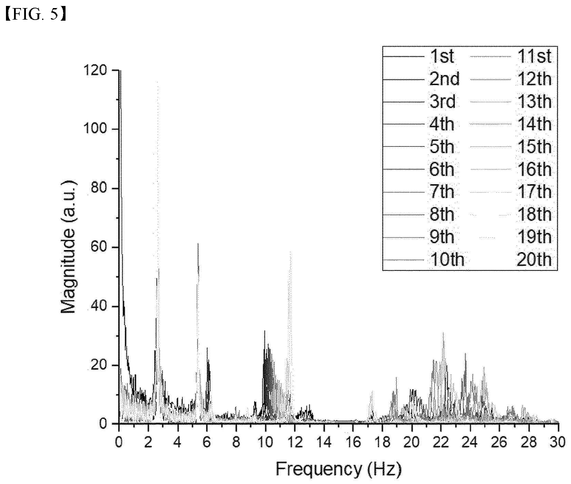

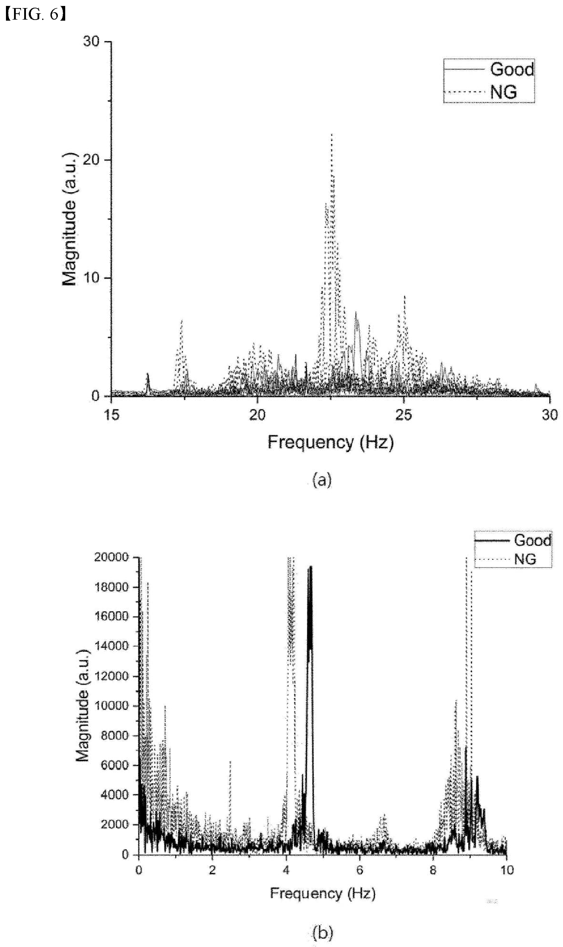

FIG. 3 illustrates a graph of displacement values measured by a displacement sensor in a thin film waviness determination system 1 according to an embodiment of the present disclosure, FIG. 4 illustrates a graph of magnitude values according to frequency signals through fast Fourier transform in a thin film waviness determination system 1 according to an embodiment of the present disclosure, FIG. 5 illustrates a graph of magnitude values according to frequency signals for each predetermined section in a thin film waviness determination system 1 according to an embodiment of the present disclosure, and FIG. 6 illustrates graphs of frequency ranges for determining good/defective quality of a thin film in a thin film waviness determination system 1 according to an embodiment of the present disclosure.

Referring to FIG. 3, displacement values of a separator measured for a predetermined period of time are shown. In order to measure the displacement value of the separator, a lateral displacement sensor 10 (Ch3) is installed at one side of the separator in the width direction to be spaced apart from the surface of the thin film. The displacement value of the separator measured in real time may be divided at predetermined time intervals. FIG. 3 illustrates that a separator being transported at a speed of 200 meters per minute (mpm) is divided at approximately 3-second intervals to divide the separator into 10m units.

The displacement value of the separator itself measured through the lateral displacement sensor 10 may be converted and used, but the displacement value of the separator measured through the central displacement sensor 20 may also be corrected and used. That is, since the amplitude of the separator may be formed differently by the vibration of the separator transport apparatus itself, the displacement value at the center of the separator may serve as a reference and be used for data correction.

The displacement value of the separator obtained by above method may be converted into a magnitude value according to the frequency signal through a fast Fourier transform. Referring to FIG. 4, the magnitudes according to the frequency signal derived through the fast Fourier transform can be identified.

By separating this into values measured for a predetermined period of time, a predetermined portion of the thin film may be separated and specified. Referring to FIG. 5, magnitude values in the range of more than 0 Hz and 30 Hz or less, measured 20 times in a portion divided into 10-second units, are shown.

Thereafter, the preset magnitude value according to the frequency signal and the converted magnitude value are compared to determine the presence or absence of the waviness in the thin film, and when the converted magnitude value falls outside the predetermined range, the separator of that portion may be determined as defective.

Referring to (a) of FIG. 6, it can be confirmed that the preset magnitude value and the converted magnitude value are different in the range of 15 Hz or more and 30 Hz or less. In addition, referring to (b) of FIG. 6, it can be confirmed that the preset magnitude value and the converted magnitude value are different in the range of more than 0 Hz and 2 Hz or less. The difference according to the frequency may be formed differently depending on various variables, but in the embodiment of the present disclosure, the frequency range that serves as a reference for determining the quality (Good part in FIG. 6)/defect (NG part in FIG. 6) is formed differently depending on the size of the width direction of the separator.

It can be confirmed that it is easier to determine the good/defective quality of the separator in the frequency range of 15 Hz or more and 30 Hz or less when the width of the separator is 600 mm as in the former, and in the frequency range of more than 0 Hz and 2 Hz or less when the width of the separator is 1200 mm as in the latter.

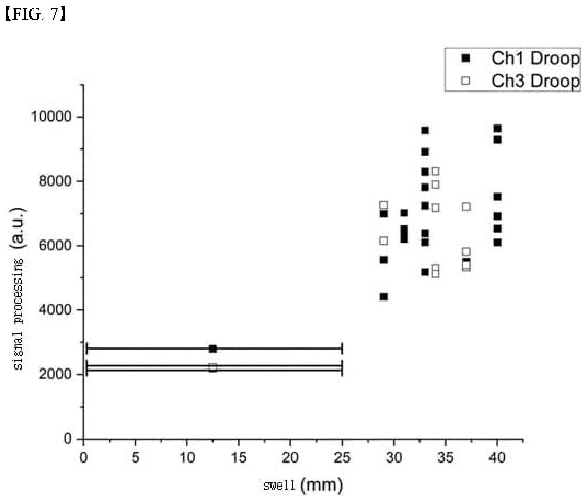

FIG. 7 illustrates a graph of a relationship between waviness size and signal processing for determining good/defective quality of a thin film in a thin film waviness determination system according to an embodiment of the present disclosure.

Referring to FIG. 7, a relationship between magnitudes of the waviness and signal processing values processed in the frequency range of more than 0 Hz and 2 Hz or less is shown. A good separator is shown in the lower left of the graph, while a defective separator is shown in the upper right of the graph. That is, it can be confirmed that the actual signal processing results for portions falling outside the predetermined waviness range (here, less than 25 mm) also fall outside the predetermined range.

Consequently, the present disclosure can more easily determine the presence or absence of the waviness and the resulting good/defective quality of the separator based solely on signal processing values.

Although the present disclosure has been described above by way of limited embodiments, the present disclosure is not limited thereto, and it is obvious that various modifications and variations can be made within the technical idea of the present disclosure and the equivalent scope of the claims to be described below by a person having ordinary skill in the art to which the present disclosure pertains.

## Claims

1. A thin film waviness determination system for determining waviness of a thin film, which is formed to have a predetermined size in a width direction and extend in a longitudinal direction, caused by tension acting on the thin film and non-uniformity of a thin film material in a roll-to-roll inline apparatus that transports the thin film in the longitudinal direction, the system comprising:
a lateral displacement sensor installed at one or more of both sides of the thin film in the width direction to be spaced apart from the surface of the thin film and configured to measure a displacement of the thin film surface; and
a waviness determination unit for converting a lateral displacement value of the thin film surface according to time measured by the lateral displacement sensor into a magnitude value according to a frequency signal and comparing the converted magnitude value with a preset magnitude value according to the frequency signal to determine the presence or absence of waviness in the thin film.

2. The thin film waviness determination system of claim 1, wherein the lateral displacement sensor measures the displacement of the thin film surface by irradiating light perpendicularly toward the surface of the thin film.

3. The thin film waviness determination system of claim 2, wherein the displacement of the thin film surface is measured by an angle and wavelength of the light reflected from the thin film surface by the light irradiated from the lateral displacement sensor.

4. The thin film waviness determination system of claim 2, wherein the lateral displacement sensor is a laser sensor.

5. The thin film waviness determination system of claim 1, wherein the waviness determination unit determines that the thin film is defective when the converted magnitude value falls outside a predetermined range based on the preset magnitude value.

6. The thin film waviness determination system of claim 1, further comprising a central displacement sensor installed at a center of the width direction of the thin film to be spaced apart from the thin film surface and configured to measure a displacement of the thin film surface.

7. The thin film waviness determination system of claim 6, further comprising a calibration unit for correcting the lateral displacement value of the thin film measured by the lateral displacement sensor based on a central displacement value of the thin film measured by the central displacement sensor.

8. The thin film waviness determination system of claim 7, wherein the calibration unit corrects the lateral displacement value of the thin film measured by the lateral displacement sensor by subtracting the central displacement value of the thin film measured by the central displacement sensor from the lateral displacement value.

9. The thin film waviness determination system of claim 7, wherein the calibration unit corrects the lateral displacement value of the thin film measured by the lateral displacement sensor by dividing the lateral displacement value by the central displacement value of the thin film measured by the central displacement sensor.

10. The thin film waviness determination system of claim 5, wherein the waviness determination unit determines the lateral displacement value of the thin film based on a value measured at a predetermined time interval.

11. The thin film waviness determination system of claim 10, wherein the waviness determination unit specifies a portion of the thin film that has been determined to be defective through the lateral displacement value of the thin film measured at the predetermined time interval.

12. The thin film waviness determination system of claim 5, wherein the waviness determination unit determines whether the thin film is defective within a frequency range of 15 Hz or more and 30 Hz or less.

13. The thin film waviness determination system of claim 5, wherein the waviness determination unit determines whether the thin film is defective within a frequency range of more than 0 Hz and 2 Hz or less.

14. The thin film waviness determination system of claim 5, wherein the waviness determination unit calculates the preset magnitude value based on at least one parameter of a distance between the rolls of the roll-to-roll inline apparatus, a position of the lateral displacement sensor, a thickness, weight, and distance in the width direction of the thin film, tension acting on the thin film, and a transport speed of the thin film.

15. The thin film waviness determination system of claim 5, wherein the waviness determination unit uses a fast Fourier transform when converting the measured lateral displacement value of the thin film according to time into the converted magnitude value according to a frequency signal.

16. The thin film waviness determination system of claim 1, wherein the lateral displacement sensor is formed to be spaced apart from an end of the thin film by more than 0 cm and 5 cm or less in the width direction of the thin film.

17. The thin film waviness determination system of claim 1, further comprising a display unit for outputting the converted magnitude value in real time.
